# EUROPEAN PATENT SPECIFICATION

(11) **EP 1 150 825 B1**
(45) Date of publication and mention of the grant of the patent: **08.07.2009**
(21) Application number: 99906710.1
(22) Date of filing: 03.02.1999
(51) Int. Cl.: B29C 65/50, B29D 30/42

(54) **BUTT SPLICING OF ELASTOMERIC SHEETS**
STOSSVERBINDEN VON GUMMIBAHNEN
EPISSAGE EN ABOUT DE FEUILLES ELASTOMERES

(43) Date of publication of application: 07.11.2001
(73) Proprietor: The Goodyear Tire & Rubber Company, Akron, OH 44316-0001 (US)
(72) Inventor: KUBINSKI, Donald, Chester, Medina, OH 44256 (US)
(74) Representative: Kutsch, Bernd
(86) International application number: PCT/US1999/002274
(87) International publication number: WO 2000/046013

(56) References cited:
- DE-A- 2 504 181
- DE-A- 3 715 920
- US-A- 4 328 066
- US-A- 4 401 504
- PATENT ABSTRACTS OF JAPAN vol. 007, no. 173 (M-232), 30 July 1983 (1983-07-30) & JP 58 076246 A (TOYO GOMU KOGYO KK), 9 May 1983 (1983-05-09)

## Description

### FIELD OF THE INVENTION

The present invention relates to the building of a pneumatic tire, and concerns a method and apparatus for reinforcing a butt splice along the edges of two reinforced elastomeric sheets to form an elastomeric member such as that used in the tire industry for the manufacture of a tire carcass.

### BACKGROUND OF THE INVENTION

As conventionally known in the tire manufacturing art, it is a common practice to join or splice the edges of two reinforced elastomeric sheets to form an elastomeric member used for the manufacture of a tire carcass.

Each of the reinforced elastomeric sheets contains a plurality of parallel reinforcing cords encapsulated within an unvulcanized synthetic or natural rubber. The reinforcing cords are substantially equal in diameter and evenly spaced between one another within the sheet. For the manufacture of a tire carcass, particularly when producing radial ply tires, the elastomeric sheets are typically cut into rectangles, which are then assembled to each other by means of a splice along adjoining edges of two adjacent sheets, the splice being parallel to the reinforcing cords.

Two commonly used splices join the edges of adjacent sheets are the butt splice and the overlap splice. The butt splice is formed by pressing one edge of one sheet against an adjacent edge of a second sheet and securing them together by mechanical or physical means, i.e. pressing them together to ensure that they are securely bonded. The overlap splice is made by covering an edge of one sheet by an adjacent edge of a second sheet, and applying pressure to the splice area which includes the overlapped region to ensure a secure bond. The double thickness of the overlap splice in the splice area has several drawbacks. These include the uneven elongation of the elastomeric member due to the difference in elongation of the narrow region of double thickness as compared with the elongation of the elastomeric member in the region of single thickness. This difference in elongation can lead to the creation of a non-uniformity in the resultant tire.

The butt splice overcomes the drawbacks of the overlap splice, i.e. has a single thickness. However, the smaller contact surface between the adjacent edges of the two sheets being assembled together inherently creates a weaker bond between the two sheets than the bond formed with the overlap splice. Also, a successful butt splice is more difficult to consistently achieve in a manufacturing environment as it depends on the proper preparation of the edges of the elastomeric sheet to ensure that the spacing between the cords at the two adjoined edges of the butt splice is no greater and no less than the spacing between the remaining cords in the sheets. Either condition, i.e. the spacing between cords along the edges of the two sheets being assembled being either greater cr less than the spacing of the other cords in the two sheets, can result in non-uniform strength across the resulting elastomeric member, uneven stretching of the elastomeric member during its expansion while forming the tire carcass, and a greater likelihood of splice failure in the resultant tire.

Another approach toward reducing or eliminating the problems associated with effectively splicing together two reinforced elastomeric sheets is to bridge the butt splice with a reinforcing strip extending the length of the splice. This approach provides a partial solution to the problem because it was always accomplished by manually applying the reinforcing strip. Until now, no one has been able to effectively apply the reinforcing strip in a manufacturing environment. Moreover, the manual application of the reinforcing strip was not a completely satisfactory solution because of the inherent variations in the thickness and length of the reinforcing strip and the added manufacturing time and costs associated with the manual application of the reinforcing strip.

A further attempt to reduce the adverse effects of using a reinforcing strip to bridge the butt splice of reinforced elastomeric articles is described in U.S. Patent 5,062,462 ('462), issued November 5, 1991 and having a common assignee with the present invention. This '462 patent describes the use of a thin splicing strip made from a spun bonded material having stress/strain/ expansion characteristics closely resembling those of the elastomer in the article. The splicing strip is manually applied across the area being spliced, contributing to increasing the labor costs associated with construction of a tire using a butt splice.

US-A- 4,328,066 describes a method and a device according to the preamble of claims 1 and 5 respectively.

### OBJECTS AND SUMMARY OF THE INVENTION

It is an object of the present invention to provide a method and apparatus for applying a splice strip along a butt splice of two elastomeric sheets as defined in one or more of the appended claims and, as such, having the capability of accomplishing one or more of the following subsidiary objects.

This problem is solved by a method according to claim 1 and a device according to claim 5.

Dependent claims refer to further embodiments of the invention.

Another object of the present invention is to provide a method and apparatus for improving the repeatability and reliability of the butt splice of reinforced elastomeric sheets.

Yet another object of the present invention is to provide a method and apparatus for increasing the rate for butt splicing reinforced elastomeric sheets while concomitantly reducing the labor costs and the overall expense of effectively splicing the two sheets together.

The present invention relates to a method of butt splicing the edges of two elastomeric sheets. The elastomeric sheet can be, if desired, reinforced with parallel cords of a non-metallic material such as polyester, cotton, rayon, nylon or aramid or of a metallic material such as for example filaments of steel which have been plated with brass. In the reinforced elastomeric sheets, the cords run parallel to one another and to the edges of the sheets being assembled together, and are evenly spaced from one to another in the sheets. The method includes the steps of securing adjacent edges of two elastomeric sheets together with the butt splicing technique. Then a thin splice strip of an uncured elastomer such as gum rubber, preferably reinforced with cords or a non-woven fabric, is applied across the butt splice securing the elastomeric sheets together. This is accomplished by first locating the splice strip onto an applicator head and holding it in place by a vacuum. The applicator head is then moved to press the splice strip against the butt splice. After the splice strip is securely in place, the vacuum is removed to release the splice strip from the applicator head and the applicator head returns to pick up another splice strip.

The applicator head is preferably rotated from a first load position where the splice strip is loaded on the head to a second position in close proximity to the butt splice. From there, the applicator head is moved to a third position where the splice strip can be pressed into contact with the butt splice. The splice strip is preferably the same length as the butt splice.

A second splice strip is loaded onto a second applicator head in the load position while the first applicator head is in the second position either before or after applying the splice strip onto the butt splice with the first applicator head. The second splice strip is held to the second head by vacuum in the same manner as the first splice strip is to the first head. The second applicator head is rotated into the second position as the first applicator head is rotated away from the second position in proximity to the butt splice and back to the load position. The second splice strip is then pressed into contact with a second butt splice and the vacuum is released to free the second splice strip from the second applicator head. The first and second applicator heads can be moved between the first load position and the second position by oscillating back and forth through an arc of 180° or by rotating in the same direction, and stopping each 180° to load one splice strip onto one applicator head while the other applicator head is at the second position above the third location while the other splice strip is applied onto the second butt splice.

The invention further includes a method of reinforcing a butt splice along the edges of two adjacently disposed elastomeric sheets, comprising the following steps. A splice strip is loaded on an applicator head at a first load position. The applicator head is moved to press the splice strip into contact with the butt splice. The applicator head is moved from the first load position to a second position in proximity to the butt splice. Then the applicator head is moved to a third position where the splice strip is first pressed into contact with the butt splice and subsequently the vacuum is released. Next, the splice strip is released from the applicator head by releasing the vacuum pressure used to hold the splice strip on the applicator head. The method can further include the additional steps of placing a second splice strip on a second applicator head in the load position; moving the first applicator head away from the butt splice after releasing the first splice strip; moving the second applicator head to the second position and then to the third position to press the second splice strip into contact with a second butt splice; and releasing the second splice strip from the second applicator head. The first applicator head and the second applicator head are oscillated or rotated through an arc of 180° between the first load position and the second position.

The invention also includes a splice strip applicating device for applying a splice strip over a butt splice. The device comprises a first applicator head, structure for applying and temporarily holding a splice strip in a first load position on the first applicator head, structure for moving the first applicator head to a second position into pressure contact with the butt splice, and structure for releasing the splice strip from the first applicator head. The device preferably includes a second applicator head disposed so that the first and second applicator heads are mounted in diametrically opposed relationship to one another with respect to the axis a shaft adapted for rotating or oscillating movement about the axis of the shaft. This arrangement of the splice strip applicating device permits the first applicator head to be in the splice strip load position while the second applicator head is in the second position 180° around the axis and in close proximity to the butt splice. The device includes a dispenser for feeding a length of the splice strip onto either of the applicator heads in the load position. It also includes a gripper to clamp on to a length of splice strip and to load the splice strip on one applicator head, and a cutter to cut the splice strip to a predetermined length while being held on an applicator head.

### BRIEF DESCRIPTION OF THE DRAWINGS

The structure, operation; and advantages of the invention will become further apparent upon consideration of the following description taken in conjunction with the accompanying drawings, wherein:
**Figure 1** is a cross-sectional end view of a butt splice between two elastomeric sheets reinforced with a splice strip in accordance with the present invention;
**Figure 2** is a perspective view of a butt splice applicating device applying a splice strip to a butt splice region of two elastomeric sheets in accordance with the present invention;
**Figures 3 and 4** are elevational views showing the sequential steps in forming and reinforcing butt splices; and
**Figure 5** is an elevational view, partially in cross section, showing details of the applicator heads.

### DEFINITIONS

As used herein, the following terms have the following meanings:
"Reinforced elastomeric sheet" means a sheet of natural or synthetic rubber containing a plurality of reinforcing cords encapsulated in the rubber, extending in a longitudinal direction, the cords being equally spaced from one another across the width of the sheet, parallel to one another and to the edges of the sheet;
"Elastomeric member" means a composite of two or more reinforced elastomeric sheets which are spliced along their adjoining edges; and
"Reinforcing cords" are cords made from natural or synthetic fibers such as cotton, rayon, polyester, nylon or aramid, or from steel or other metal wires or filaments which are braided, twisted or woven together.

### DETAILED DESCRIPTION OF THE INVENTION

This invention relates to joining the edges of two elastomeric sheets of the type used in a construction of a pneumatic tire. More particularly, the present invention relates to splicing together adjacent reinforced elastomeric sheets, each containing a plurality of parallel extending, reinforcing cords encapsulated in an elastomeric material such as a natural or synthetic rubber compound. All of the reinforcing cords are substantially equal in diameter and equally spaced from each other. The density of reinforcing members is stated in terms of ends per centimeter (epc) or ends per inch (epi) and is defined as the number of reinforcing members per unit length, as counted in a direction perpendicular to the longitudinal direction of the reinforcing members. A cord density between about 3.2 epc (8 epi) and about 12.8 epc (32 epi) is conventionally used for reinforcing elastomeric members used to make tire carcass plies. Typically, the reinforcing cords are made from suitable materials such as cotton, polyester, nylon, rayon, aramid, fiberglass or metal. A suitable metal comprises filaments of steel which have been plated with brass to provide better adhesion to rubber. The cords are encapsulated in a natural or a synthetic rubber compound.

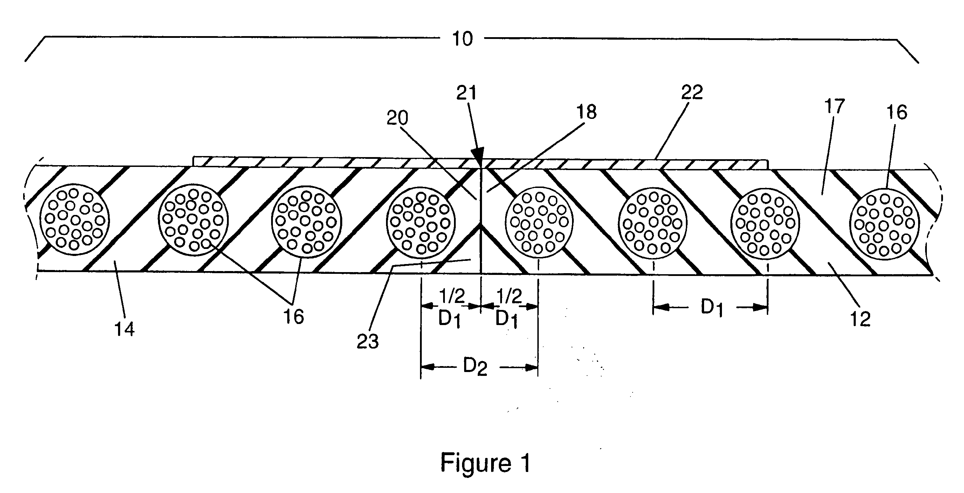

Referring in greater detail to the drawings, **Figure 1** is a cross-sectional view of a portion of an elastomeric member **10** produced by splicing two reinforced elastomeric sheets **12, 14** with a butt splice **21.** The butt splice **21** is formed along the adjacent edges of the ends **18, 20** of the two reinforced elastomeric sheets **12, 14,** respectively. Each elastomeric sheet **12,14** contains reinforcing cords **16.** The cords **16** are embedded in a suitable elastomeric material **17** such as natural rubber, Neoprene or butadiene compounded with additives such as antioxidants, extenders, carbon black, fillers, and curing agents. The cords **16** in each sheet **12, 14** are parallel to one another and are evenly spaced by a distance **D_{I}.** The cords **16** are also parallel to the edges **18,20** of the sheets **12,14** respectively, and preferably separated therefrom by a thickness of elastomer equal to ½ **D₁** as shown in **Figure 1****.**

The two reinforced sheets **12, 14** are bonded together by a butt splice **21** to form the elastomeric member **10.** Conventional wisdom dictates that the spacing **D₂** between the cords **16** on either side of the splice **21** be equal to the interval spacing **D₁** between the cords within each sheet **12,14.** In this manner, the uniformity of the reinforced elastomeric member **10** across its width is preserved. If the spacing **D₂** is less or more than **D₁,** the properties of the elastomeric member **10** in the splice area **23** are different than elsewhere throughout the elastomeric member, as discussed herein before.

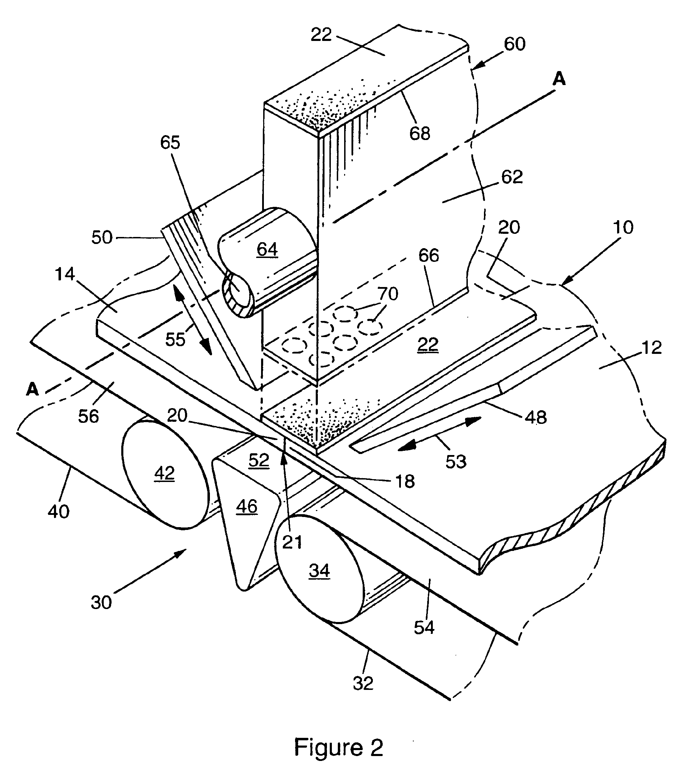

Referring to **Figure 2****,** the splicing machine or equipment **30** used for butt splicing two reinforced sheets **12,14** together is shown in perspective. The splicing equipment **30** includes a first conveyor belt **32** moving around two or more rollers **34,** and a second conveyor belt **40** moving around two or more rollers **42.** An anvil **46** is positioned between the conveyor belts **32, 40** with the top surface **52** of the anvil coplanar with both the top surface **54** of the first conveyer belt **32** and the top surface **56** of the second conveyer belt **40.** A pair of diagonally movable splicing bars **48, 50** are spaced above the conveyor belts **32, 40** and the anvil **46.** The splicing bars **48, 50** are adapted to reciprocate in a direction back and forth with respect to the anvil surface **52** as shown by the arrows **53,55.** The bars **48,50** push against the two sheets **12, 14,** respectively, near their edges **18,20** and cause the sheets to slide over the surface **52** of anvil **46** so that the edges **18,20** are forced into one another to form the butt splice **21.**

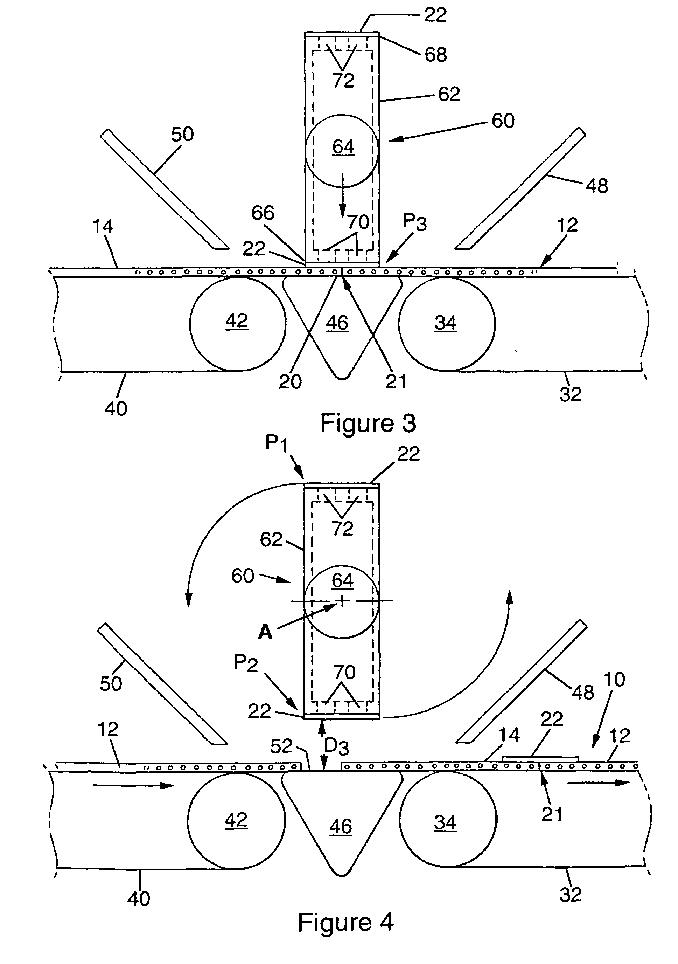

The splicing equipment **30** of the present invention includes a splice strip applicating device **60** that is preferably positioned immediately above the anvil **46.** The splice strip applicating device **60** has an enclosed rectangularly shaped vacuum container 62 fixedly mounted on a shaft **64** that rotates vacuum container **62** about an axis **A-A.** Strip applicating device **60** includes two rectangularly shaped applicator heads **66, 68** which are located on opposite ends of vacuum container **62.** Each head **66, 68** as seen in **Figures 3 and 4****,** preferably contains a plurality of ports **70, 72** connected to a vacuum pressure source (not shown) which can be drawn from the vacuum container **62** through, for example an open passage **65** through shaft **64.** The vacuum pressure source is capable of drawing a vacuum of about one atmosphere. The amount of vacuum pressure is adjusted to hold a splice strip **22** on each of the applicator heads **66, 68.** The vacuum container **62** is reciprocally movable within a support structure (not shown) that includes a controller (not shown) that can be programmed to rotate one applicator head **66** through an arc of 180° from a splice strip load first position **P₁** to a second position **P₂** spaced above surface **52** of anvil **46,** as shown in **Figure 4****.** The splice strip applicating device **60** is also programmed to move the applicator head then disposed at second position **P₂** (see **Figure 4**) in a linear direction for a distance **D₃** from the second position **P₂** to a third position **P₃.** The applicating device **60** at position **P₃,** then presses a splice strip **22,** as shown in **Figure 3****,** against the butt splice **21** until the splice strip **22** is pressed into contact with the butt splice **21** previously formed on the anvil **46** with splicing bars **48,50** as described above. Device **60** is further programmed to withdraw the applicator head from the splice **21** after the vacuum is turned off and the splice strip is released from the applicator head. Any suitable mechanical, pneumatic, hydraulic or servo-electric control, all of which are well known in the art, can be used for moving the vacuum container **62** through the sequence of operations. It should be understood that each of the applicator heads **66,68** preferably reciprocate together as a single unit toward and away from the third position **P₃** to apply the reinforcing strip **22** to the butt splice **21.** Alternatively, the heads **66,68** can be made independently movable with respect to the remainder of the vacuum container **62** toward and away from the position **P₃** and butt splice **21.**

The vacuum ports **70** on first applicator head **66** are preferably connected through a manifold (not shown), possibly extending through bore **65** extending though shaft **64,** to a vacuum pressure source. The vacuum ports **72** on second applicator head **68** are preferably connected through a separate manifold to the same or a separate vacuum source. Through suitable valving and controls, a vacuum pressure can be selectively drawn on one applicator head at a time. The vacuum container **62** can be mounted for rotational and reciprocating movements and a separate vacuum hose can be coupled to each of the manifolds to selectively supply vacuum through the ports **70, 72** of applicator heads **66,68,** respectively. That is, the vacuum container **62** can rotate from position **P₁** clockwise 180° about axis A-A to position **P₂.** Then the head goes through a reciprocating movement to a position **P₃** to apply the splice strip and then back to position **P₂** from which the applicator head then rotates back in the counter-clockwise direction to position **P₁** to begin the cycle again.

Alternatively, the two applicator heads **66, 68** can be rotated about axis A-A 180° in the same direction between the splice strip load position **P₁** and the second position **P₂.** The applicator heads **66, 68** in this alternative embodiment still have a reciprocating movement from position **P₂** to splice strip application location **P₃.** The latter embodiment will require journalling of the vacuum hoses to the vacuum source to permit the continual rotation of a vacuum container **62** in the same direction.

**Figure 3** shows a pair of elastomeric sheets **12, 14** joined together to form a butt splice 21 by the movement of splicing bars **48,50** pressing the ends of sheets **12,14** against each other. The two diagonal splicing bars **48, 50** are shown withdrawn from the splice **21** and the strip applicating device **60** is shown being moved down into position **P₃** to press the splice strip **22** against the butt spice **21** which in turn is being supported upon the surface **52** of anvil **46.** As the splice strip **22** moves into contact with the butt splice **21,** the vacuum to the first applicator head **66** is **released.** The tackiness of the uncured rubber splice strip **22** and the elastomeric sheets **12, 14** ensures that they remain adhered to one another as the strip applicator device **60** is moved away from the butt splice **21** to position **P₂.**

**Figure 4** shows the next step in the sequence with arrows whereby the strip applicator device **60** is rotated 180° to move the second applicator head **68** loaded with a splice strip **22** to the second position **P₂** above the anvil **46** as the empty applicator head **66** is rotated to the splice strip load position **P₁** where another splice strip is loaded thereon. Concurrently, the elastomeric member **10** is moved to the right on the conveyor belts **32, 40** until the free end **18** of the elastomeric member **10** is centered on surface **52** of anvil **46.** A first elastomeric sheet **12** is then moved toward anvil **46** by conveyor belt **40** until its forward free edge **20** is in abutting relationship with the free edge **18** of the second sheet **14** of member **10.** This procedure can be repeated until a reinforced elastomeric member having the desired length is formed.

The conveyor belts **32, 40** are capable of moving in the same direction or in opposite directions depending upon the end use requirements for feeding elastomeric sheets **12,14** to the butt splicer **60** and to shift or transfer the spliced elastomeric members **10** away. For example, if an elastomeric member is constructed of only two sheets, the two sheets may be fed to the splicer on separate conveyor belts from opposite directions where they meet, are butt spliced with the splicer bars, and are reinforced with the splice strip **22** to form the reinforced elastomeric member **10.** The member **10** is then transferred on either conveyor belt to the next station. Alternatively, if more than two sheets are to be spliced together, the first two sheets are spliced and are then transferred along one conveyor belt until the exposed or open edge of one of the sheets is positioned over the anvil. Then a third sheet is then moved on the other conveyor to abut the exposed edge and to form the splice as described before.

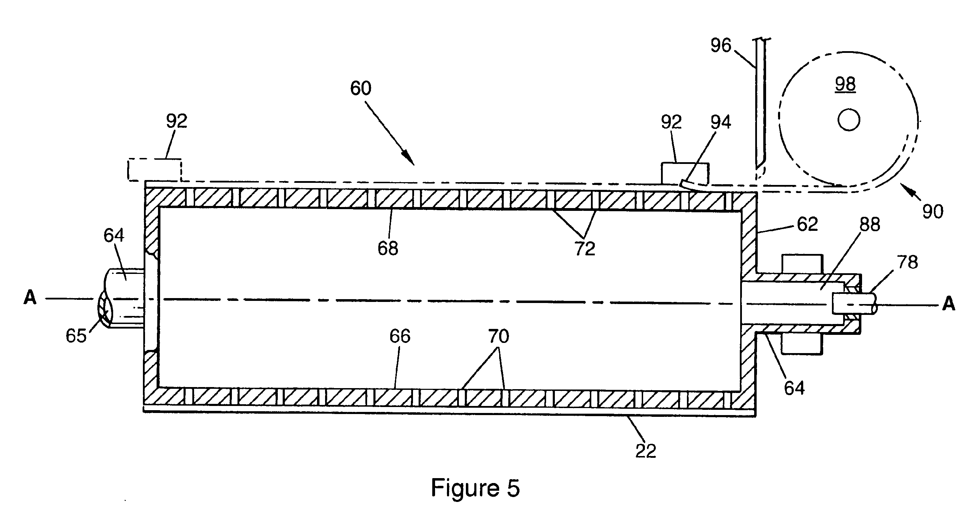

Turning now to **Figure 5****,** there is shown a cross sectional view of a rectangularly shaped vacuum container **62** the splice strip. The applicating device **60** is mounted to rotate on a shaft **64** about axis A-A. The chamber **62** has a first and second applicator heads **66, 68,** respectively. The first applicator head **66** has a plurality of vacuum ports **70.** The second applicator head **68** likewise has a plurality of vacuum ports **72.** All of the vacuum ports in each head are typically connected through a manifold (not shown) to a vacuum pump of known design and operation, capable of drawing at least about 1 (one) atmosphere (760 mm of Hg). A vacuum hose **78** is shown passing through a hollow end **88** of the shaft **64** into the interior of the vacuum container **62** where the hose may be split into two with each branch connected through suitable valving (not shown) to one set of ports.

The vacuum container **62** can be controlled to rotate 180° on the shaft **64** so as to move the applicator head **66** from the load position **P₁,** as shown in **Figure 4****,** where it receives a first splice strip **22** to the second position **P₂** over a butt splice **21** while concurrently, the second applicator head **68** is rotated 180° back from the second position **P₂** to the load position **P₁** for reloading with another splice strip **24.**

The splice strips **22** can be loaded onto the applicator heads in the following manner. A dispenser **90** holding a roll **98** of splice material is positioned in proximity to the load position **P₁.** A gripper **92** of conventional design grabs the free end **94** of the roll **98** of splice material and pulls it along the length of the applicator head **68** as shown. A vacuum pressure being present at ports **72** releasably holds the strip to the applicator head **68.** The cutter knife **96** then cuts the splice material to the predetermined length corresponding to the length of the butt splice **21.**

By using the method and a tire building device of the present invention, a tire can be built with improved uniformity and reduced incident of failure due to separations of the butt splices. Furthermore, by using butt splices instead of lap splices in the construction of the tire, there is a substantial reduction in the number of completed tires with visually undesirable sidewall ripples. Finally, the production rate of tires can be substantially increased, such as in the order of 10%.

## Claims

1. A method of reinforcing a butt splice (21) along ends (18, 20) of elastomeric sheets (12, 14) comprising the steps of:
a) loading a splice strip (22) onto a first applicator head (66) at a first position P₁;
b) rotating the first applicator head (66) from the first position P₁ to a second positon P₂ spaced from the butt splice (21);
c) translationally moving the first applicator head (66) from the second position P₂ to a third position P₃;
d) releasing the splice strip (22) from the first applicator head (66) at the third position P₃; and
e) moving the first applicator head (66) from the third position P₃ to the second position P₂; **characterized in that** the method comprises
f) pressing the splice strip (22) into contact with the butt splice (21) at the third position P₃ with the first applicator head (66).

2. The method of claim 1 including the steps of :
holding the splice strip (22) to the first applicator head (66) by vacuum pressure as the first applicator head is moved from a first load position P₁ where the splice strip is loaded on the first applicator head to the second position P₂ in proximity to the butt splice (21);
moving the first applicator head to the third position P₃ where the splice strip is pressed into contact with the butt splice (21); and
releasing the vacuum pressure on the first applicator head (66) to release the splice strip (22) from the first applicator head (66) after the splice strip (22) is adhered to the butt splice (21).

3. The method of claim 2 including the steps of:
loading a second splice strip (24) onto a second applicator head (68) in the first loading position P₁;
moving the second applicator head (68) to the second position P₂ spaced from the butt splice (21);
moving the second applicator head (66) to the third position P₃ to press the second splice strip (24) into contact with a second butt splice (23); and
releasing the second splice strip (24) from the second applicator head (68) after the second splice strip (24) is adhered to the second butt splice (23).

4. The method of claim 3 including the step of rotating the first applicator head (66) and the second applicator head (68) through an arc of 180° between the first load position P₁ and the second position P₂.

5. A device (60) for applying a splice strip (22) over a butt splice (21) between two elastomeric sheets (12, 14, the device comprising:
a) a first applicator head (66) for loading and releasably holding the splice strip (22) in a first load position P₁;
b) means for moving the first applicator head (66) from the first position to a second position P₂ spaced from the butt splice (21);
c) means for releasing the splice strip (22) from the first applicator head (66), **characterized in that** the device comprises means for moving the first applicator head (66) from the second position P₂ to a third position P₃ for and pressing the splice strip (22) into contact with the butt splice (21) with the first applicator head (66), wherein the first applicator head (66) is fitted to allow depressing the splice strip (22) over the butt splice (21).

6. The device (60) of claim 5 further **characterized by** a second applicator head (68) for loading and releasably holding a second splice strip (24).

7. The device (60) of claim 6 further **characterized by** means for selectively applying a vacuum pressure at a plurality of ports (70, 72) at the first and second applicator heads (66, 68) for separately holding the splice strip (22) on the first applicator head (66) and a second splice strip (24) on the second applicator head (68).

8. The device (60) of claim 7 further **characterized**
**by** a vacuum chamber (62) mounted on a shaft (64) that moves through an arc about axis A-A extending longitudinally through the shaft (64) so that the first applicator head (66) and the second applicator head (68) move between the first load position P₁ and the second position P₂; and
by the first applicator head (66) and the second applicator head (68) being positioned on diametrically opposite sides of the axis A-A whereby one applicator head (66) is in the load position P₁ while the other applicator head (68) is in the second position P₂.

9. The device (60) of claim 8 further **characterized by** a dispenser (90) for feeding material from a roll (98) of splice material to either the first or the second applicator head (66, 68).

10. The device (60) of claim 9 further **characterized**
**by** a gripper (92) to clamp on to a free end (94) of a strip forming the roll (98) of splice material and to load the strip on one applicator head while the applicator head is in the load position P₁; and
by a cutter (96) to cut the splice strip, while held on either the first or the second applicator heads (66, 68), to a predetermined length corresponding to the length of a splice to be reinforced.

## Patentansprüche

1. Verfahren zur Verstärkung einer Stoßspleißung (21) entlang Enden (18, 20) von Elastomerbögen (12, 14), umfassend die Schritte des:
a) Ladens eines Spleißstreifens (22) auf einen ersten Applikatorkopf (66) an einer ersten Position P₁;
b) Verdrehens des ersten Applikatorkopfs (66) von der ersten Position P₁ zu einer von der Stoßspleißung (21) beabstandeten zweiten Position P₂;
c) Translationsbewegens des ersten Applikatorkopfs (66) von der zweiten Position P₂ zu einer dritten Position P₃;
d) Freigebens des Spleißstreifens (22) aus dem ersten Applikatorkopf (66) an der dritten Position P₃; und
e) Bewegens des ersten Applikatorkopfs (66) von der dritten Position P₃ zu der zweiten Position P₂; **dadurch gekennzeichnet, dass** das Verfahren
f) das in Kontakt Drücken des Spleißstreifens (22) mit der Stoßspleißung (21) an der dritten Position P₃ mit dem ersten Applikatorkopf (66) umfasst.

2. Verfahren nach Anspruch 1, die Schritte beinhaltend des:
Haltens des Spleißstreifens (22) an dem ersten Applikatorkopf (66) durch Vakuumdruck, während der erste Applikatorkopf von einer ersten Ladeposition P₁, wo der Spleißstreifen auf den ersten Applikatorkopf geladen wird, zu der zweiten Position P₂ in unmittelbarer Nähe der Stoßspleißung (21) bewegt wird;
Bewegens des ersten Applikatorkopfs zu der dritten Position P₃, wo der Spleißstreifen in Kontakt mit der Stoßspleißung (21) gedrückt wird; und
Lösens des Vakuumdrucks auf dem ersten Applikatorkopf (66), um den Spleißstreifen (22) von dem ersten Applikatorkopf (66) freizugeben, nachdem der Spleißstreifen (22) an der Stoßspleißung (21) angeheftet ist.

3. Verfahren nach Anspruch 2, die Schritte umfassend des:
Ladens eines zweiten Spleißstreifens (24) auf einen zweiten Applikatorkopf (68) in der ersten Ladeposition P₁;
Bewegens des zweiten Applikatorkopfs (68) zu der von der Stoßspleißung (21) beabstandeten zweiten Position P₂;
Bewegens des zweiten Applikatorkopfs (66) zu der dritten Position P₃, um den zweiten Spleißstreifen (24) in Kontakt mit einer zweiten Stoßspleißung (23) zu drücken; und
Freigebens des zweiten Spleißstreifens (24) von dem zweiten Applikatorkopf (68), nachdem der zweite Spleißstreifen (24) an der zweiten Stoßspleißung (23) angeheftet ist.

4. Verfahren nach Anspruch 3, umfassend den Schritt des Drehens des ersten Applikatorkopfs (66) und des zweiten Applikatorkopfs (68) über einen Bogen von 180° zwischen der ersten Ladeposition P₁ und der zweiten Position P₂.

5. Vorrichtung (60) zur Anbringung eines Spleißstreifens (22) über einer Stoßspleißung (21) zwischen zwei Elastomerbögen (12, 14), wobei die Vorrichtung umfasst:
a) einen ersten Applikatorkopf (66) zum Laden und lösbaren Festhalten des Spleißstreifens (22) in einer ersten Ladeposition P₁;
b) Mittel zum Bewegen des ersten Applikatorkopfs (66) von der ersten Position zu einer von der Stoßspleißung (21) beabstandeten zweiten Position P₂;
c) Mittel zum Freigeben des Spleißstreifens (22) aus dem ersten Applikatorkopf (66), **dadurch gekennzeichnet, dass** die Vorrichtung Mittel zum Bewegen des ersten Applikatorkopfs (66) von der zweiten Position P₂ zu einer dritten Position P₃, um den Spleißstreifen (22) mit dem ersten Applikatorkopf (66) in Kontakt mit der Stoßspleißung (21) zu drücken, wobei der erste Applikatorkopf (66) dazu eingerichtet ist, das Herunterdrücken des Spleißstreifens (22) über die Stoßspleißung (21) zu gestatten.

6. Vorrichtung (60) nach Anspruch 5, weiter **gekennzeichnet durch** einen zweiten Applikatorkopf (68) zum Laden und lösbaren Festhalten eines zweiten Spleißstreifens (24).

7. Vorrichtung (60) nach Anspruch 6, weiter **gekennzeichnet durch** Mittel zum selektiven Anlegen eines Vakuumdrucks an einer Vielzahl von Öffnungen (70, 72) an dem ersten und zweiten Applikatorkopf (66, 68) zum separaten Halten des Spleißstreifens (22) an dem ersten Applikatorkopf (66) und eines zweiten Spleißstreifens (24) an dem zweiten Applikatorkopf (68).

8. Vorrichtung (60) nach Anspruch 7, weiter **gekennzeichnet**
**durch** eine Vakuumkammer (62), die auf einer Welle (64) montiert ist, die sich über einen Bogen um die sich in Längsrichtung durch die Welle (64) erstreckende Achse A-A bewegt, sodass der erste Applikatorkopf (66) und der zweite Applikatorkopf (68) sich zwischen der ersten Ladeposition P₁ und der zweiten Ladeposition P₂ bewegen; und
**dadurch**, dass der erste Applikatorkopf (66) und der zweite Applikatorkopf (68) auf diametral entgegengesetzten Seiten der Achse A-A positioniert sind, wobei ein Applikatorkopf (66) sich in der Ladeposition P₁ befindet, während der andere Applikatorkopf (68) sich in der zweiten Position P₂ befindet.

9. Vorrichtung (60) nach Anspruch 8, weiter **gekennzeichnet durch** eine Abgabevorrichtung (90) zur Zufuhr von Material von einer Rolle (98) von Spleißmaterial entweder zu dem ersten oder dem zweiten Applikatorkopf (66, 68).

10. Vorrichtung (60) nach Anspruch 9, weiter **gekennzeichnet**
**durch** einen Greifer (92) zum Anklemmen an einem freien Ende (94) eines Streifens, der die Rolle (98) von Spleißmaterial bildet, und zum Laden des Streifens auf einen Applikatorkopf, während der Applikatorkopf sich in der Ladeposition P₁ befindet; und
**durch** ein Schneidwerkzeug (96) zum Schneiden des Spleißstreifens, während er auf entweder dem ersten oder dem zweiten Applikatorkopf (66, 68) gehalten wird, auf eine vorbestimmte Länge entsprechend der Länge einer zu verstärkenden Spleißung.

## Revendications

1. Procédé de renforcement d'une épissure en about (21) le long des extrémités (18, 20) de feuilles élastomères (12, 14), comprenant les étapes consistant à :
a) charger un ruban de soudure (22) sur une première tête d'application (66) à une première position P₁ ;
b) faire passer par rotation la première tête d'application (66) de la première position P₁ à une deuxième position P₂ espacée de l'épissure en about (21) ;
c) soumettre la première tête d'application (66) à un mouvement de translation pour passer de la deuxième position P₂ à une troisième position P₃ ;
d) libérer le ruban de soudure (22) de la première tête d'application (66) à la troisième position P₃ ; et
e) faire passer la première tête d'application (66) de la troisième position P₃ à la deuxième position P₂ ; **caractérisé en ce que** le procédé comprend le fait de :
f) mettre par compression le ruban de soudure (22) en contact avec l'épissure en about (21) à la troisième position P₃ avec la première tête d'application (66).

2. Procédé selon la revendication 1, englobant les étapes consistant à :
maintenir le ruban de soudure (22) contre la première tête d'application (66) par dépression lorsque la première tête d'application passe d'une première position de chargement P₁ à laquelle le ruban de soudure est chargé sur la première tête d'application à la deuxième position P₂ à proximité de l'épissure en about (21) ;
faire passer la première tête d'application à la troisième position P₃ à laquelle le ruban de soudure est mis en contact par compression avec l'épissure en about (21) ; et
supprimer la dépression s'exerçant sur la première tête d'application (66) afin de libérer le ruban de soudure (22) de la première tête d'application (66) une fois que le ruban de soudure (22) adhère à l'épissure en about (21).

3. Procédé selon la revendication 2, englobant les étapes consistant à :
a) charger un deuxième ruban de soudure (24) sur une deuxième tête d'application (68) dans la première position de chargement P₁ ;
b) faire passer la deuxième tête d'application (68) à la deuxième position P₂ espacée de l'épissure en about (21) ;
c) faire passer la deuxième tête d'application (68) à la troisième position P₃ pour mettre par compression le deuxième ruban de soudure (24) en contact avec une deuxième épissure en about (23) ; et
d) libérer le deuxième ruban de soudure (24) de la deuxième tête d'application (68) une fois que le deuxième ruban de soudure (24) adhère à la deuxième épissure en about (23).

4. Procédé selon la revendication 3, englobant l'étape consistant à soumettre la première tête d'application (66) et la deuxième tête d'application (68) à une rotation en parcourant un arc de 180° entre la première position de chargement P₁ et la deuxième position P₂.

5. Dispositif (60) pour appliquer un ruban de soudure (22) par-dessus une épissure en about (21) entre deux feuilles élastomères (12, 14), le dispositif comprenant :
a) une première tête d'application (66) pour charger et maintenir de manière amovible le ruban de soudure (22) dans une première position de chargement P₁ ;
b) un moyen pour faire passer la première tête d'application (66) de la première position à une deuxième position P₂ espacée de l'épissure en about (21) ;
c) un moyen pour libérer le ruban de soudure (22) de la première tête d'application (66), **caractérisé en ce que** le dispositif comprend un moyen pour faire passer la première tête d'application (66) de la deuxième position P₂ à une troisième position P₃ pour mettre par compression le ruban de soudure (22) en contact avec l'épissure en about (21) avec la première tête d'application (66), la première tête d'application (66) étant prévue pour permettre une application du ruban de soudure (62) par dépression par-dessus l'épissure en about (21).

6. Dispositif (60) selon la revendication 5, **caractérisé en outre par** une deuxième tête d'application (68) pour le chargement et le maintien de manière amovible d'un deuxième ruban de soudure (24).

7. Dispositif (60) selon la revendication 6, **caractérisé en outre par** un moyen pour appliquer de manière sélective une dépression sur plusieurs orifices (70, 72) à la première et à la deuxième tête d'application (66, 68) pour maintenir séparément le ruban de soudure (22) sur la première tête d'application (66) et un deuxième ruban de soudure (24) sur la deuxième tête d'application (68).

8. Dispositif (60) selon la revendication 7, **caractérisé en outre**
**par** une chambre de vide (62) montée sur un arbre (64) qui se déplace en parcourant un arc autour d'un axe A-A s'étendant en direction longitudinale à travers l'arbre (64), de telle sorte que la première tête d'application (66) et la deuxième tête d'application (68) se déplacent entre la première position de chargement P₁ et la deuxième position de chargement P₂ ; et
par le fait que la première tête d'application (66) et la deuxième tête d'application (68) sont disposées sur des côtés diamétralement opposés de l'axe A-A, une tête d'application (66) se trouvant dans la position de chargement P₁ lorsque l'autre tête d'application (68) se trouve dans la deuxième position P₂.

9. Dispositif (60) selon la revendication 8, **caractérisé en outre par** un distributeur (90) pour alimenter de la matière à partir d'un rouleau (98) d'une matière de soudure, soit à la première, soit à la deuxième tête d'application (66, 68).

10. Dispositif (60) selon la revendication 9, **caractérisé en outre**
**par** un dispositif de préhension (92) pour saisir par pincement une extrémité libre (94) du ruban formant le rouleau (98) de matière de soudure et pour charger le ruban sur une tête d'application, tandis que la tête d'application se trouve dans la position de chargement P₁ ; et
par une lame (96) pour découper le ruban de soudure, tandis qu'il est maintenu, soit sur la première, soit sur la deuxième tête d'application (66, 68), à une longueur prédéterminée correspondant à la longueur d'une épissure qui doit être renforcée.
